# FASCICULE DE BREVET EUROPEEN

(11) **EP 1 060 353 B1**
(45) Date de publication et mention de la délivrance du brevet: **02.05.2003**
(21) Numéro de dépôt: 99906310.0
(22) Date de dépôt: 26.02.1999
(51) Int. Cl.: F24J 2/04

(54) **DISPOSITIF DE TRANSFERT DE CHALEUR ENTRE UN PANNEAU CHAUFFE PAR RAYONNEMENT SOLAIRE ET UNE PAROI**
VORRICHTUNG ZUM WÄRMEAUSTAUSCH ZWISCHEN EINER SOLARBEHEIZTEN PLATTE UND EINER WAND
DEVICE FOR TRANSFERRING HEAT BETWEEN A PANEL HEATED BY SOLAR RADIATION AND A WALL

(30) Priorité: 04.03.1998 FR 9802632; 14.08.1998 FR 9810434
(43) Date de publication de la demande: 20.12.2000
(73) Titulaire: MASA-THERM S.A., 2043 Boudevilliers (CH)
(72) Inventeur: RYLEWSKI, Eugeniusz, F-78470 Saint Rémy lès Chevreuse (FR)
(74) Mandataire: Bezault, Jean
(86) Numéro de dépôt international: FR9900444
(87) Numéro de publication internationale: WO99045328

(56) Documents cités:
- EP-A- 0 028 800
- DE-A- 3 004 364
- DE-A- 3 545 648
- FR-A- 2 478 800
- FR-A- 2 509 023
- US-A- 4 058 109
- US-A- 4 379 449
- US-A- 4 411 255
- US-A- 4 469 087

## Description

L'invention concerne un dispositif pour transférer de la chaleur entre un panneau propre à être chauffé par rayonnement solaire et une paroi, telle que par exemple un mur d'un bâtiment.

On connaît déjà des dispositifs appliqués en façade d'un bâtiment pour capter l'énergie solaire et chauffer un milieu récepteur tel que, par exemple, un mur extérieur du bâtiment ou un volume d'air à l'intérieur du bâtiment.

Ces dispositifs de captage de l'énergie solaire sont parfois appelés aussi des "panneaux solaires" ou des "isolations transparentes".

Un dispositif de ce type est décrit par exemple dans le Brevet français N° 92 03962.

Ce dispositif connu comprend une multiplicité d'éléments profilés sensiblement horizontaux espacés les uns des autres et superposés pour former un rideau ayant une face externe propre à être exposée à un rayonnement solaire et une face interne propre à être disposée du côté du milieu récepteur à chauffer. Ce dispositif permet ainsi de transférer de la chaleur, tout en constituant un isolant efficace.

Dans un tel dispositif, on prévoit habituellement une plaque de conversion qui fait partie du panneau et qui assure la transformation de l'énergie solaire en chaleur.

Les dispositifs de transfert, du type panneau solaire, sont appliqués habituellement directement sur la façade d'un bâtiment pour permettre non seulement un transfert de chaleur à partir du rayonnement solaire collecté, mais aussi une isolation thermique lorsque le rayonnement solaire a cessé.

On connaît par ailleurs, d'après le document US-A-4 379 449, un autre dispositif de transfert de chaleur entre un panneau propre à être chauffé par un rayonnement solaire et une paroi à chauffer. Ce dispositif comprend une plaque de séparation propre à être disposée entre le panneau et la paroi, parallèlement à ces derniers, de manière à délimiter un espace extérieur fermé entre le panneau et la plaque de séparation et un espace intérieur fermé entre la plaque de séparation et la paroi, ainsi que des moyens de circulation d'air comprenant au moins un ventilateur.

Dans ce dispositif connu, la plaque de séparation est destinée à assurer un transfert thermique entre l'air contenu dans l'espace extérieur et l'air contenu dans l'espace intérieur. Le ventilateur est placé au travers de la paroi pour envoyer, dans un bâtiment placé derrière la paroi, l'air provenant de l'espace intérieur qui a été chauffé par l'air contenu dans l'espace extérieur, au travers de la plaque de séparation qui assure un transfert thermique.

L'invention part de la constatation que les panneaux solaires connus jusqu'à présent ne permettent pas de maîtriser toutes les situations que l'on rencontre en pratique.

La Demanderesse a constaté qu'il existait en fait quatre situations différentes à maîtriser :
a) La chaleur fournie par le rayonnement solaire est bienvenue et il faut la transférer à la paroi, par exemple le mur, à chauffer.
b) Il existe un excès de chaleur solaire, et il faut donc éviter tout transfert de chaleur entre le panneau et la paroi à chauffer.
c) Il n'y a pas d'apport de chaleur solaire, et il faut éviter toute perte de chaleur depuis la paroi, par exemple le mur, vers l'extérieur.
d) Il n'existe pas d'apport de chaleur solaire, mais un excès de chaleur réside dans la paroi. Il faut donc, dans la mesure du possible, évacuer cette chaleur vers l'extérieur.

Le but principal de l'invention est de procurer un dispositif de transfert de chaleur du type défini en introduction qui maîtrise en priorité les trois premières situations (a, b, c). La quatrième situation (d: rafraîchissement la nuit) exige en principe une logique supplémentaire et la maîtrise de cette situation ne s'impose véritablement que dans certains climats.

Le dispositif de l'invention comprend les caractéristiques suivantes : la plaque de séparation est une plaque isolante; une cloison est disposée dans chacun de l'espace extérieur et de l'espace intérieur pour y définir au moins un trajet de circulation en forme générale de U avec deux branches de part et d'autre de la cloison; les moyens de circulation d'air comprennent au moins deux ouvertures pratiquées dans la plaque de séparation et propres à faire communiquer les branches de l'espace extérieur avec les branches de l'espace intérieur; et le ventilateur est placé au travers de la cloison et est susceptible d'être placé sélectivement dans au moins l'un des états suivants :
- un état ouvert autorisant une circulation d'air entre l'espace extérieur et l'espace intérieur et permettant ainsi un transfert thermique entre le panneau et la paroi ;
- un état fermé interdisant une circulation d'air entre l'espace extérieur et l'espace intérieur et empêchant ainsi un transfert thermique entre le panneau et la paroi.

Ainsi, en fonction de l'état (ouvert ou fermé) des moyens de circulation d'air, il est possible d'autoriser ou au contraire d'interdire un transfert thermique entre le panneau et la paroi. Lorsque ces moyens de circulation d'air sont à l'état ouvert, un transfert de chaleur s'opère entre le panneau et la paroi. En revanche, lorsque les moyens de circulation d'air sont à l'état fermé, il n'y a pas de transfert de chaleur, mais au contraire une bonne isolation thermique.

L'invention réalise donc une maîtrise du transfert thermique par convection en supprimant la liaison directe conductive et/ou radiative entre le panneau et la paroi et en intercalant un dispositif particulier. Ce dispositif, avec ses deux espaces vides et sa plaque isolante entre le panneau et la paroi, garantit une faible conduction thermique, ainsi qu'un faible transfert par radiation, tout en permettant un transfert thermique par convection.

Le panneau auquel s'applique l'invention peut être dans n'importe quelle position : verticale, inclinée ou horizontale.

La paroi vers laquelle la chaleur est à transférer est en principe un mur de maçonnerie, mais il pourrait s'agir aussi d'un toit plat ou encore d'un récipient contenant un liquide.

Le terme "ouverture" tel qu'utilisé ici entend désigner de façon générale tout passage, y compris des étranglements ou des chicanes, faisant communiquer les espaces intérieur et extérieur du dispositif.

De préférence, les moyens de circulation d'air comprennent deux ouvertures placées sensiblement à la même hauteur par rapport à un côté du dispositif, ce qui permet de limiter le flux d'air allant d'une ouverture à une autre. Par contre, si les ouvertures ne sont pas à la même hauteur, il faut pouvoir bloquer le flux d'air naturel, par exemple au moyen d'un clapet.

La cloison qui est disposée dans chacun de l'espace extérieur et de l'espace intérieur permet de définir, dans chacun desdits espaces, au moins un trajet de circulation en forme générale de U comportant deux branches de part et d'autre de la cloison.

Cette disposition à circuits en U convient essentiellement aux parois verticales. Elle assure un bon balayage de surface et facilite une circulation d'air dans chacun des espaces extérieur et intérieur, ainsi qu'une circulation d'air d'un espace à l'autre. Un effet de balayage analogue pourrait être obtenu par d'autres moyens, par exemple par des chicanes, ou encore par d'autres types de circuits de circulation d'air entre les deux espaces précités.

Avantageusement, les moyens de circulation d'air précités comprennent au moins une première ouverture faisant communi quer une première branche de l'espace extérieur avec une première branche de l'espace intérieur, et au moins une deuxième ouverture faisant communiquer une deuxième branche de l'espace extérieur avec une deuxième branche de l'espace intérieur.

Dans l'invention, lorsque le ventilateur est en fonctionnement, une circulation d'air est réalisée à la fois dans chacun des espaces extérieur et intérieur, et d'un espace à l'autre. Par contre, lorsque le ventilateur est hors de fonctionnement, la circulation d'air est arrêtée.

Dans une autre forme de réalisation, l'organe de réglage de débit comprend un ventilateur électrique et un clapet, lequel est situé dans la même ouverture que le ventilateur électrique et/ou dans une autre ouverture.

On utilise avantageusement un clapet à gravité qui s'ouvre par la pression de l'air et se ferme par gravité. Ce clapet se ferme par gravité lorsque le ventilateur ne fournit pas la pression nécessaire pour l'ouvrir. Lorsque le ventilateur et le clapet sont placés dans deux ouvertures différentes, ces dernières ne sont pas nécessairement à la même hauteur. Ce clapet peut même être supprimé si les deux ouvertures sont situées à la même hauteur, de préférence en haut ou en bas.

Lorsque le dispositif est utilisé sur un toit plat, il est préférable de prévoir, en plus du ventilateur, un clapet dans chaque ouverture.

A la place d'un clapet à gravité, il est possible aussi d'utiliser un clapet actionné par une lame bi-métal chauffée par le rayonnement solaire ou un clapet à commande électromagnétique. Dans certaines versions, on peut même se contenter d'un clapet à commande mécanique manuelle.

Lorsqu'il y a ensoleillement et que le transfert thermique vers la paroi est bloqué, la température peut atteindre des niveaux qui pour certains matériaux, en particulier d'isolation, sont excessifs.

L'invention prévoit à cet effet des moyens de protection contre l'apparition de températures excessives.

Une mesure pour cela consiste à placer une plaque supplémentaire, dite plaque tampon, entre le panneau et la plaque isolante pour créer un espace tampon fermé entre l'espace extérieur et la plaque isolante. Au besoin, cet espace tampon peut être aéré, de préférence par un courant d'air naturel, au travers d'une ouverture fixe en bas et d'une autre ouverture avec un clapet en haut. Ce clapet peut être actionné par une lame bi-métal dès que la température atteint un certain seuil prédéterminé. Le cas échéant, la chaleur excessive est évacuée vers l'extérieur.

Une autre mesure consiste à placer une plaque intercalaire, dite plaque de conversion, entre le panneau et la plaque isolante pour créer un premier circuit d'air (ou circuit de chauffage) propre à transférer de la chaleur entre la plaque intercalaire et la paroi, ou inversement, et pour créer un second circuit d'air (ou circuit de rafraîchissement) propre à évacuer de la chaleur vers l'extérieur. On prévoit également que le premier circuit d'air et le second circuit d'air comportent respectivement des premiers moyens de circulation d'air et des seconds moyens de circulation d'air qui peuvent être placés sélectivement, et indépendamment les uns des autres, dans un état ouvert ou un état fermé.

La plaque de conversion transforme l'énergie solaire en chaleur et elle remplace alors celle que comprend habituellement le panneau.

Le premier circuit permet de transférer la chaleur de la plaque de conversion à la paroi, ou inversement, selon que l'on se trouve en régime d'hiver ou d'été. Le second circuit est destiné à évacuer la chaleur vers l'extérieur : évacuer la chaleur de la paroi vers l'extérieur et/ou évacuer l'excès de chaleur de la plaque intercalaire vers l'extérieur.

De préférence, le premier circuit d'air est un circuit fermé, pouvant communiquer avec l'extérieur par une petite ouverture d'équilibrage de pression, tandis que le second circuit d'air est un circuit fermé ou ouvert vers l'extérieur.

Par les expressions "circuit fermé" et "circuit ouvert", on veut dire ici que la circulation de l'air s'effectue dans un ou plusieurs espaces ou volumes, respectivement sans communication avec l'extérieur et avec communication avec l'extérieur.

Le dispositif de l'invention comprend en outre des moyens de commande propres à commander l'organe de réglage de débit, par exemple le ventilateur.

Dans une forme de réalisation de l'invention, ces moyens de commande comprennent des moyens de commande manuelle.

Dans une autre forme de réalisation, ces moyens de commande comprennent au moins deux capteurs de température propres à détecter les températures respectives du panneau (ou d'une plaque de conversion) et de la paroi, et à commander l'organe de réglage de débit en fonction de la différence de température entre le panneau (ou la plaque de conversion) et la paroi.

Dans une forme de réalisation évoluée, ces moyens de commande comprennent des moyens électroniques.

Avantageusement, les moyens de commande comprennent au moins un composant photosensible propre à détecter l'ensoleillement d'un panneau et à générer une tension électrique représentative de l'ensoleillement.

Le composant photosensible peut être une cellule photovoltaïque, ce qui permet de générer une énergie directement utilisable pour faire tourner le ventilateur. Mais on peut utiliser aussi des phototransistors, photodiodes ou photorésistances, qui donnent un signal utilisable directement (par l'intermédiaire d'un amplificateur) pour actionner le ventilateur, ou indirectement comme donnée de calcul pour un circuit logique.

A titre d'exemple, on peut utiliser un phototransistor accouplé à un montage du type "Darlington" qui délivre une puissance de sortie suffisante pour actionner un ventilateur fonctionnant sous une tension continue de 12 Volts.

La tension électrique ainsi générée peut être utilisée soit directement en tant qu'énergie pour actionner l'organe de réglage de débit, soit en tant que signal pour autoriser ou interdire le fonctionnement de l'organe de réglage de débit.

A la place d'un composant photosensible, il est envisageable d'utiliser au moins un composant thermosensible, par exemple un détecteur de température ou de différence de température, un thermostat ou une lame bi-métal.

Le dispositif de l'invention est avantageusement réalisé sous la forme d'un module, de dimensions standards ou adaptées, comprenant un cadre supportant les composants du dispositif.

Dans la description qui suit, faite seulement à titre d'exemple, on se réfère aux dessins annexés, sur lesquels :
- la figure 1 est une vue partielle en coupe d'un dispositif de transfert selon l'invention placé entre un panneau susceptible d'être chauffé par rayonnement solaire et une paroi à chauffer ;
- la figure 2 est une vue en élévation d'un dispositif de transfert selon l'invention réalisé sous la forme d'un élément modulaire ;
- la figure 3 est une vue en coupe selon la ligne III-III de la figure 2 ;
- les figures 4, 5 et 6 sont des vues analogues à la figure 1 pour d'autres variantes de réalisation ;
- les figures 7 et 8 sont des vues en élévation analogues à la figure 2 pour d'autres variantes de réalisation ;
- la figure 9 est une vue en coupe partielle d'un dispositif selon l'invention comprenant un espace tampon ;
- la figure 10 est une vue en élévation d'un dispositif de transfert selon une autre forme de réalisation de l'invention;
- la figure 11 est une vue en coupe selon la ligne XI-XI de la figure 10 ;
- la figure 12 est une vue en coupe selon la ligne XII-XII de la figure 10 ;
- la figure 13 est une vue en coupe d'un dispositif de transfert à deux circuits d'air selon l'invention ; et
- la figure 14 est une vue en coupe analogue à la figure 13 dans une variante de réalisation.

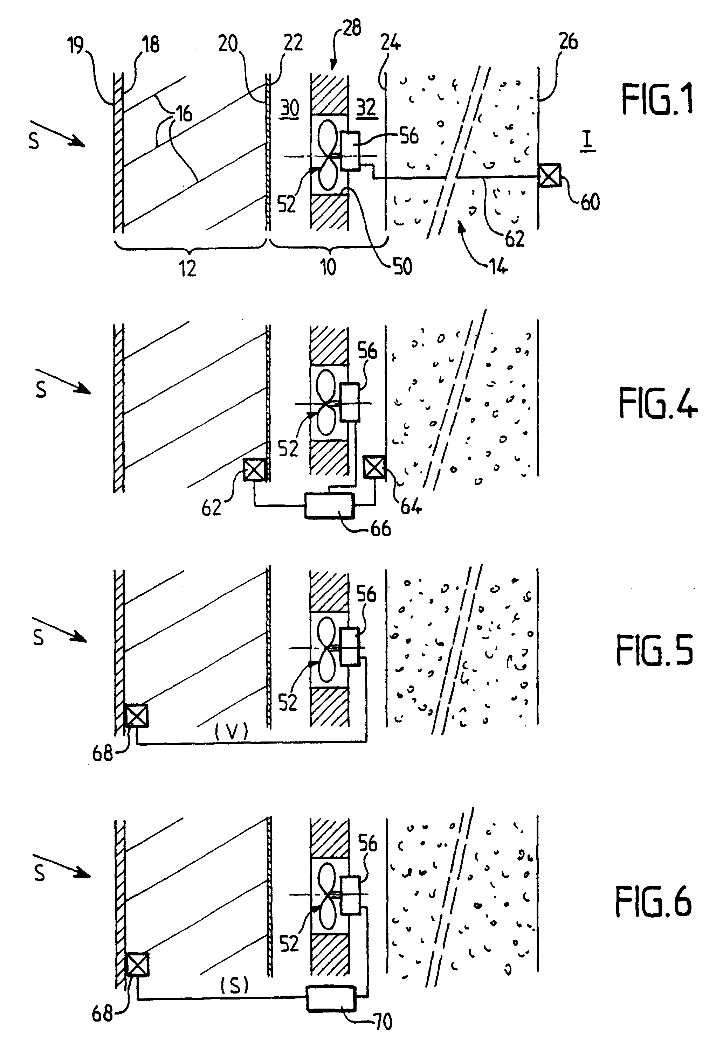

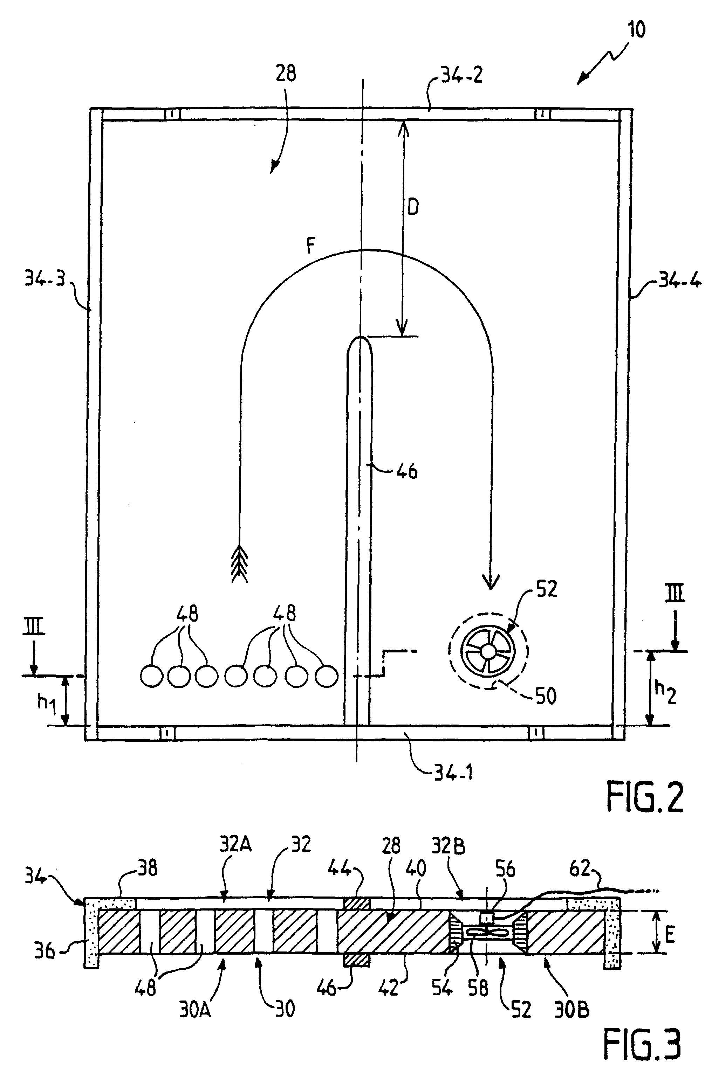

On se réfère tout d'abord à la figure 1 qui montre un dispositif de transfert de chaleur 10 selon l'invention, disposé entre un panneau 12 propre à être chauffé par un rayonnement solaire S et une paroi 14 qui constitue le mur d'un bâtiment. Le panneau 12, encore appelé "panneau solaire" ou "isolation transparente" est, dans cet exemple, réalisé conformément aux enseignements du Brevet français N°92 03962. Bien entendu, ce panneau pourrait être réalisé d'une autre façon, du moment qu'il permet de capter de l'énergie solaire.

Dans l'exemple, le panneau 12 comprend une multiplicité d'éléments profilés 16 identiques, sensiblement horizontaux, espacés les uns des autres et superposés dans un plan sensiblement vertical pour former une sorte de rideau. Ce rideau possède une face externe 18 et une face interne 19 opposée. La face externe 18 est fermée par une plaque transparente 19 (par exemple une vitre de verre) propre à être exposée au rayonnement solaire S. La face interne 20 est fermée par une plaque 22, telle une tôle métallique de couleur noire.

Cette plaque constitue une plaque de conversion qui transforme l'énergie solaire en chaleur. Elle peut être distincte du panneau, comme on le verra plus loin.

Les éléments profilés 16 permettent de conduire l'énergie solaire depuis la face externe du rideau vers la face interne, c'est-à-dire vers la plaque métallique 22. En outre, ces éléments profilés définissent entre eux des canaux ascendants qui créent une multiplicité de couches d'air chaud. Ces couches d'air sont immobilisées et constituent en même temps un très bon isolant avec un coefficient de perte thermique réduit.

La paroi 14, qui constitue le mur d'un bâtiment, possède une face externe 24 orientée vers le dispositif 10 et une face interne 26 orientée vers l'intérieur I du bâtiment.

Le dispositif de transfert 10 comprend, pour l'essentiel, une plaque isolante 28 propre à être disposée entre le panneau 12 et la paroi 14, dans une disposition sensiblement parallèle à ces derniers. Cette plaque isolante 28 est espacée du panneau 12 et de la paroi 14 de manière à délimiter, d'une part, un espace extérieur fermé 30 entre le panneau et la plaque isolante et, d'autre part, un espace intérieur fermé 32 entre la plaque isolante et la paroi.

On se réfère maintenant aux figures 2 et 3 pour décrire en détail la structure du dispositif de transfert 10. Ce dispositif est réalisé sous la forme d'un élément modulaire de forme générale rectangulaire (figure 2) pouvant avoir des dimensions standard ou adaptées sur mesure.

La plaque isolante 28 est supportée par un cadre 34 ayant, en section droite, la forme d'une cornière avec une aile 36 entourant la périphérie de la plaque isolante 28 et une aile 38 propre à s'appliquer contre la face externe 24 de la paroi 14 (figure 3).

La plaque 28 est réalisée dans un matériau isolant thermiquement, tel qu'une mousse de matière plastique, des fibres minérales, etc. La plaque isolante 28 possède une face 40 propre à s'appuyer contre l'aile 38 du cadre et une face opposée 42. Elle possède une épaisseur E qui peut être comprise, par exemple, entre 1 et 10 centimètres.

Le cadre 34 comprend un côté inférieur 34-1, un côté supérieur 34-2 et deux côtés verticaux 34-3 et 34-4.

Le dispositif 10 comprend en outre deux cloisons sensiblement verticales, à savoir une cloison 44 disposée le long de la face 40 de la plaque isolante 28 et une cloison verticale 46 disposée le long de la face 42 de la plaque isolante 28 (figure 3).

Chacune de ces cloisons s'étend à partir du côté inférieur 34-1 du cadre et se termine à une distance D du côté supérieur 34-2 du cadre (figure 2). Les cloisons 44 et 46 ont sensiblement la même hauteur. Il en résulte que l'espace extérieur 30 et l'espace intérieur 32 ont une configuration générale en forme de U.

La plaque isolante 28 comporte une série de premières ouvertures 48 traversant la plaque de part en part et alignées sur une ligne horizontale se situant à une hauteur h1 par rapport au côté inférieur 34-1 du cadre. Ces ouvertures 48 font communiquer une première branche 30-A de l'espace extérieur 30 avec une première branche 32-A de l'espace intérieur 32 (figure 3).

Par ailleurs, la plaque isolante 28 est munie d'une deuxième ouverture 50 située à une hauteur h2 par rapport au côté inférieur 34-1 du cadre (figure 2) et faisant communiquer une deuxième branche 30-B de l'espace extérieur 30 avec une deuxième branche 32-B de l'espace intérieur 32.

Grâce aux cloisons 44 et 46, aux ouvertures 48 et à l'ouverture 50, de l'air peut circuler suivant un trajet de circulation en forme générale de U, à la fois dans l'espace extérieur 30 et dans l'espace intérieur 32.

Conformément à l'invention, le dispositif comprend un ventilateur 52 (figures 1, 2 et 3) qui est disposé dans l'ouverture circulaire 50. Ce ventilateur comprend un boîtier 54 susceptible d'être logé dans l'ouverture 50 et supportant un moteur électrique 56 propre à entraîner en rotation une hélice 58.

Ce ventilateur 52 procure ainsi une ventilation mécanique permettant de régler le débit d'air circulant dans chacun des espaces 30 et 32 et entre ces derniers. Le ventilateur peut être amené soit dans un état ouvert (fonctionnement) soit dans un état fermé (arrêt).

Lorsque le ventilateur est en fonctionnement, il autorise une circulation d'air entre les espaces 30 et 32 et permet ainsi un transfert thermique entre le panneau 12 et la paroi 14.

Par contre, lorsque le ventilateur est arrêté, il interdit la circulation d'air entre les espaces 30 et 32 et empêche ainsi un transfert thermique entre le panneau 12 et la paroi 14.

Dans la forme de réalisation de la figure 1, le ventilateur 52 comprend une commande manuelle 60 située à l'intérieur I du bâtiment et reliée au ventilateur par une ligne électrique 62 (figures 1 et 3).

Dans la forme de réalisation de la figure 4, les moyens de commande du ventilateur comprennent deux capteurs de température 62 et 64 propres à détecter les températures respectives du panneau 12 (plaque 22) et de la paroi 14. Ces capteurs 62 et 64 sont reliés à un thermostat différentiel 66 propre à commander le ventilateur 52 en fonction de la différence de température entre le panneau et la paroi. Il en résulte que la commande du ventilateur s'effectue de manière automatique.

Cette commande automatique peut être plus ou moins sophistiquée et incorporer, par exemple, des moyens électroniques de commande pour tenir compte des principaux paramètres en jeu et optimiser ainsi le transfert de chaleur en fonction des conditions thermiques et des besoins.

Dans la forme de réalisation de la figure 5, les moyens de commande comprennent au moins une cellule photovoltaïque 68 portée par le panneau 12 et propre à détecter l'ensoleillement d'un panneau et à générer une tension électrique V représentative de l'ensoleillement. Dans le cas de la figure 5, cette tension électrique est utilisée directement en tant qu'énergie pour actionner le moteur électrique du ventilateur 52.

Dans la forme de réalisation de la figure 6, les moyens de commande comprennent également au moins une cellule photovoltaïque 68. Toutefois, celle-ci est utilisée pour fournir ici un signal S appliqué à une unité 70 pour autoriser ou interdire le fonctionnement du ventilateur 52.

Chacun des éléments modulaires qui peut avoir une largeur horizontale comprise par exemple entre 1 et 2 mètres et une hauteur verticale comprise par exemple entre 1,50 et 2 mètres, constitue un module indépendant équipé de son propre ventilateur.

Selon l'invention, la commande des ventilateurs peut être globale, les ventilateurs étant alors branchés en parallèle, ou au contraire individuelle, chaque ventilateur répondant à sa propre commande. Une commande individuelle peut être intéressante car il est possible, notamment, de tenir compte de l'ombre projetée sur la façade de bâtiment par des arbres ou maisons voisines.

Dans le cas où le dispositif comprend des moyens de commande sophistiqués, ces derniers prendront en compte à la fois la température du panneau 12 et celle de la paroi 14, ainsi que les températures extérieures et intérieures. Ces moyens de commande incorporeront en outre des consignes et des critères.

Le panneau 10, encore appelé isolation transparente, peut être rudimentaire étant donné que le dispositif 12 selon l'invention contribue principalement au transfert de chaleur.

Ainsi, ce dispositif 10 n'est pas nécessairement limité à un dispositif comme décrit dans le Brevet français 92 03962 déjà cité.

A titre d'exemple, le dispositif 10 pourrait comprendre un vitrage de façade (verre, polycarbonate, etc) constituant la face extérieure 18, un espace vide avec par exemple des évents, des films ou des matériaux non tissés transparents prévus pour freiner les mouvements d'air ; et une tôle noire pour constituer la plaque 22.

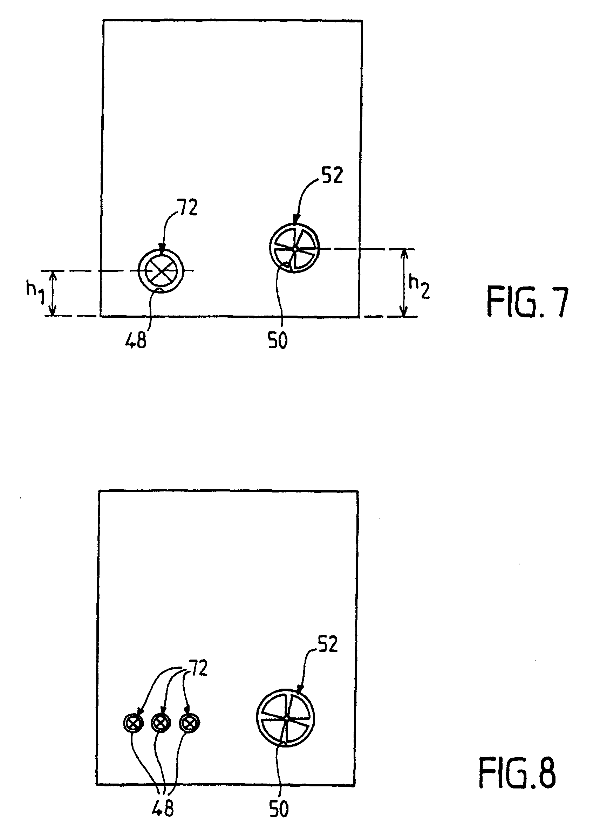

Dans la forme de réalisation de la figure 7, le dispositif s'apparente à celui des figures 1 à 3 et peut comporter ou non un double circuit de circulation en U. Il comprend une ouverture 50 munie d'un ventilateur électrique 52 et une ouverture 48 munie d'un clapet à gravité 72. Dans l'exemple le ventilateur et le clapet sont situés dans des ouvertures différentes situées à des hauteurs h1 et h2 qui peuvent être identiques ou différentes. En variante, ils pourraient être placés dans une même ouverture.

Dans la forme de réalisation de la figure 8, le dispositif s'apparente à celui des figures 1 à 3 et peut comporter ou non un double circuit de circulation en U. Il comprend une ouverture 50 munie d'un ventilateur électrique 52 et des ouvertures 48 munies chacune d'un clapet à gravité 72.

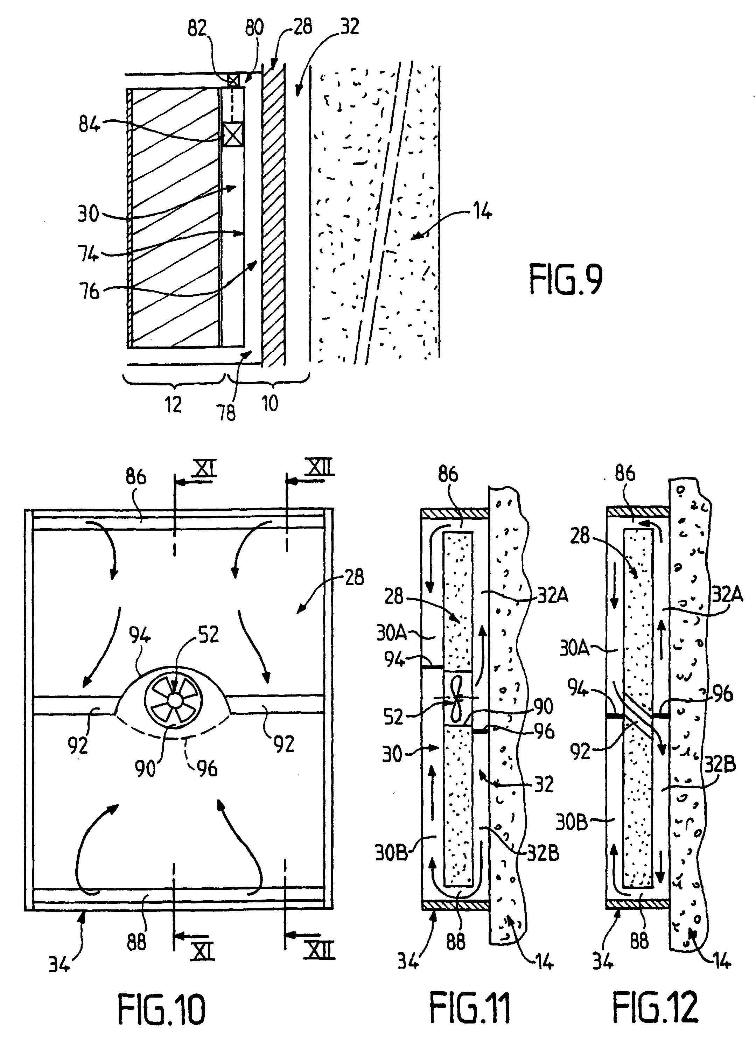

Le dispositif selon la figure 9 comprend une plaque supplémentaire 74, appelée "plaque tampon", réalisée par exemple sous la forme d'une tôle en aluminium et placée entre le panneau 12 et la plaque isolante 28, ce qui permet de créer un espace tampon fermé 76 entre l'espace extérieur 30 et la plaque isolante 28. Le cas échéant, cet espace tampon peut être aéré, de préférence par un courant d'air naturel, au travers d'une ouverture fixe 78 en bas et d'une ouverture 80 munie d'un clapet 82 en haut. Les ouvertures 78 et 80 font communiquer l'espace tampon 76 avec le milieu ambiant extérieur à travers le panneau 12. Le clapet 82 est actionné par une lame bi-métal 84 dès que la température atteint un certain seuil. Cette lame est placée dans l'espace extérieur 30, derrière le panneau 12.

Dans la forme de réalisation des figures 10 à 12, le dispositif est un module comprenant un cadre 34 supportant une plaque isolante 28. Cette plaque 28 est pourvue, respectivement en haut et en bas, de deux ouvertures 86 et 88 de forme rectangulaire, s'étendant à l'horizontale, pour faire communiquer l'espace extérieur 30 et l'espace intérieur 32.

La plaque isolante 28 est pourvue en outre d'une ouverture centrale 90 de forme circulaire dans laquelle est logé un ventilateur électrique 52 et de deux ouvertures latérales 92 de forme oblongue disposées de part et d'autre de l'ouverture centrale 90 sur une ligne horizontale.

Par ailleurs, l'espace extérieur 30 est divisé par une cloison sensiblement horizontale 94 en deux compartiments superposés 30A et 30B, tandis que l'espace intérieur 32 est divisé par une cloison sensiblement horizontale 96 en deux compartiments superposés 32A et 32B.

Il en résulte qu'un flux d'air peut circuler d'un espace à l'autre, sous l'action du ventilateur 52, suivant le circuit représenté par les flèches. Le flux d'air passe du compartiment 30B au compartiment 32A par l'ouverture 90 puis gagne le compartiment 30A par l'ouverture 86. Après cela, le flux d'air gagne le compartiment 32B par les ouvertures 92 puis rejoint le compartiment 30B par l'ouverture 88, et ainsi de suite.

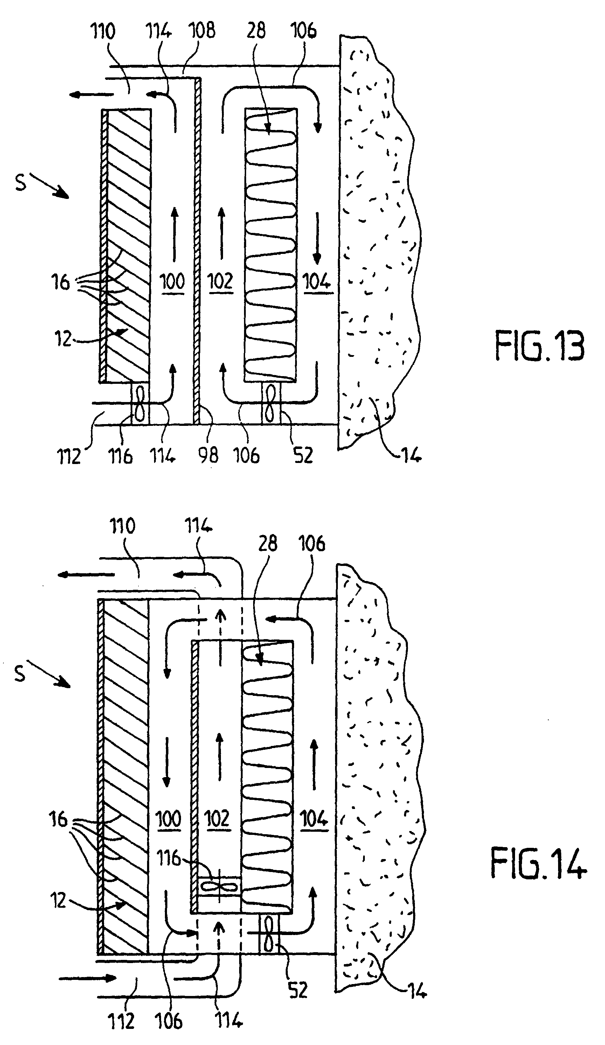

Dans la forme de réalisation de la figure 13, le dispositif s'apparente à celui de la figure 9. Il comprend une plaque intercalaire 98 qui est placée entre le panneau 12 et la plaque isolante 28. Cette plaque intercalaire, encore appelée plaque de conversion, permet de convertir l'énergie solaire en chaleur. Il s'agit généralement d'un corps solide de préférence de couleur noire.

Il en résulte que la plaque 22 formée d'une tôle métallique de couleur noire (figure 1) peut être supprimée du panneau 12, puisque la transformation de l'énergie solaire en chaleur est effectuée ici par la plaque intercalaire.

Ceci permet de créer trois espaces : un espace 100 entre le panneau 12 et la plaque de conversion 98, un espace 102 entre la plaque 98 et la plaque isolante 28, et un espace 104 entre cette plaque isolante et la paroi 14.

Les espaces 102 et 104 permettent de créer un premier circuit d'air, matérialisé par les flèches 106, sous l'action de premiers moyens de circulation d'air constitués ici par un ventilateur 52 analogue à celui décrit précédemment. Ce ventilateur 52 est prévu en partie inférieure de la plaque isolante 28. Ce premier circuit d'air communique avec le milieu extérieur par une petite ouverture 108 d'équilibrage de pression.

Par ailleurs, l'espace 100 communique avec l'extérieur par deux ouvertures 110, 112, respectivement en partie supérieure et en partie inférieure. Ceci permet de créer un second circuit d'air, matérialisé par les flèches 114, sous l'action d'un ventilateur 116 placé en partie inférieure de l'espace 100.

Le premier circuit 106 est en principe un circuit fermé qui communique avec l'extérieur uniquement par l'ouverture 108 d'équilibrage de pression. Le second circuit 114 est ici ouvert vers l'extérieur, mais pourrait, en variante, être fermé.

Le premier circuit constitue un circuit de chauffage destiné à transférer la chaleur de la plaque de conversion 98 à la paroi 14, et inversement, selon que l'on se trouve en régime d'hiver ou d'été. En fait, ce premier circuit correspond aux différents circuits décrits précédemment.

Le second circuit constitue un circuit de rafraîchissement qui est destiné à évacuer la chaleur vers l'extérieur. Il peut évacuer la chaleur de la paroi 14 vers l'extérieur (par exemple de nuit en été) et/ou évacuer l'excès de chaleur de la plaque de conversion 98 vers l'extérieur (par exemple de jour par ensoleillement en été).

Les premiers moyens de circulation d'air 52 et les seconds moyens de circulation d'air 116 peuvent être placés sélectivement, et indépendamment, dans un état ouvert ou un état fermé, ce qui définit en tout quatre possibilités de fonctionnement .

Ces deux circuits sont susceptibles de nombreuses variantes dont l'une d'entre elles est représentée à la figure 14. Dans celle-ci, le premier circuit 106 emprunte les espaces 100 et 104, alors que le second circuit 114 emprunte l'espace 102.

Ces deux circuits pourraient, en variante, avoir une partie de leur trajet en commun et comporter des moyens de circulation d'air avec des ventilateurs et des clapets fonctionnant comme des aiguillages pour réaliser soit un chauffage, soit un rafraîchissement.

Dans une autre variante, le second circuit pourrait être confiné à un seul espace. Auquel cas, un ventilateur placé dans cet espace provoquerait une turbulence et, par conséquent, une bonne convexion entre les parois. En outre, le ventilateur étant arrêté, ce même espace agirait alors comme un isolant.

Bien entendu, l'invention n'est pas limitée aux formes de réalisation décrites précédemment à titre d'exemple et s'étend à d'autres variantes.

On comprendra que la conversion de l'énergie solaire en chaleur s'effectue sur un corps solide de préférence noir qui peut être une plaque (en principe une tôle) située contre l'isolation transparente (plaque 22 de la figure 1) ou bien encore contre la paroi isolante 28, ou bien encore à mi-chemin entre l'isolation transparente et la paroi isolante 28 (plaque intercalaire 98 des figures 13 et 14).

Au lieu d'une plaque, on peut utiliser une surface opaque qui peut être située par exemple sur la face arrière d'un vitrage. On peut encore utiliser un treillis, par exemple une laine minérale ou métallique, perméable à l'air.

Dans les exemples décrits précédemment, les éléments profilés 16 du panneau 12 (voir figure 1) définissent des canaux ascendants. Toutefois, il pourrait aussi être envisagé de les incliner en sens inverse pour créer des canaux descendants de l'extérieur vers l'intérieur.

Par ailleurs, lorsque le dispositif est réalisé sous la forme d'un module, il peut être prévu que le cadre supporte l'ensemble des composants du dispositif, y compris le panneau.

Le dispositif de l'invention permet ainsi de maîtriser parfaitement les quatre situations évoquées plus haut et d'autoriser ou interdire le transfert de chaleur en fonction des conditions rencontrées et des souhaits de l'utilisateur.

## Revendications

1. Dispositif de transfert de chaleur entre un panneau (12) propre à être chauffé par un rayonnement solaire (S) et une paroi (14) à chauffer, comprenant une plaque de séparation (28) propre à être disposée entre le panneau (12) et la paroi (14), parallèlement à ces derniers, de manière à délimiter un espace extérieur fermé (30) entre le panneau (12) et la plaque de séparation (28) et un espace intérieur fermé (32) entre la plaque de séparation (28) et la paroi (14), ainsi que des moyens de circulation d'air (48, 50, 52) comprenant au moins un ventilateur (52),
**caractérisé en ce que** la plaque de séparation (28) est une plaque isolante, **en ce qu'**une cloison (46, 44) est disposée dans chacun de l'espace extérieur (30) et de l'espace intérieur (32) pour y définir au moins un trajet de circulation en forme générale de U avec deux branches (30-A, 30-B; 32-A, 32-B) de part et d'autre de la cloison, **en ce que** les moyens de circulation d'air comprennent au moins deux ouvertures (48, 50) pratiquées dans la plaque de séparation (28) et propres à faire communiquer les branches (30-A, 30-B) de l'espace extérieur (30) avec les branches (32-A, 32-B) de l'espace intérieur (32), et **en ce que** le ventilateur (52) est placé au travers de la plaque de séparation (28) et est susceptible d'être placé sélectivement dans au moins un des états suivants :
- un état ouvert autorisant une circulation d'air entre l'espace extérieur (30) et l'espace intérieur (32) et permettant ainsi un transfert thermique entre le panneau (12) et la paroi (14) ; et
- un état fermé interdisant une circulation d'air entre l'espace extérieur (30) et l'espace intérieur (32) et empêchant ainsi un transfert thermique entre le panneau (12) et la paroi (14).

2. Dispositif selon la revendication 1, **caractérisé en ce que** les moyens de circulation d'air comprennent deux ouvertures (48, 50) placées sensiblement à la même hauteur (h1, h2) par rapport à un côté (34-1) du dispositif.

3. Dispositif selon l'une des revendications 1 et 2, ***caractérisé* en ce que** les moyens de circulation d'air comprennent au moins une première ouverture (48) faisant communiquer une première branche (30-A) de l'espace extérieur (30) avec une première branche (32-A) de l'espace intérieur (32), et au moins une deuxième ouverture (50) faisant communiquer une deuxième branche (30-B) de l'espace extérieur (30) avec une deuxième branche (32-B) de l'espace intérieur (32).

4. Dispositif selon l'une des revendications 1 à 3, **caractérisé en ce qu'**il comprend en outre une plaque supplémentaire (74), dite plaque tampon, placée entre le panneau (12) et la plaque isolante (28) pour créer un espace tampon fermé (76) entre l'espace extérieur (30) et la plaque isolante (28).

5. Dispositif selon l'une des revendications 1 à 3, **caractérisé en ce qu'**il comprend en outre une plaque intercalaire (98) dite plaque de conversion, placée entre le panneau (12) et la plaque isolante (28), pour créer un premier circuit d'air (106) propre à transférer de la chaleur entre la plaque intercalaire (98) et la paroi (14), ou inversement, et pour créer un second circuit d'air (114) propre à évacuer de la chaleur vers l'extérieur, et **en ce que** le premier circuit d'air (106) et le second circuit d'air (114) comportent respectivement des premiers moyens de circulation d'air (52) et des seconds moyens de circulation d'air (116) qui peuvent être placés sélectivement, et indépendamment, dans un état ouvert ou un état fermé.

6. Dispositif selon la revendication 5, **caractérisé en ce que** le premier circuit d'air (106) est un circuit fermé, pouvant communiquer avec l'extérieur par une petite ouverture (108) d'équilibrage de pression, tandis que le second circuit d'air (114) est un circuit fermé ou ouvert vers l'extérieur.

7. Dispositif selon l'une des revendications 1 à 6, **caractérisé en ce qu'**il comprend en outre des moyens de commande (60 ; 62 ; 64 ; 68) propres à commander le ventilateur (52).

8. Dispositif selon la revendication 7, **caractérisé en ce que** les moyens de commande comprennent des moyens de commande manuelle (60).

9. Dispositif selon la revendication 7, **caractérisé en ce que** les moyens de commande comprennent au moins deux capteurs de température (62, 64) propres à détecter les températures respectives du panneau (12), ou d'une plaque de conversion (22 ; 98), et de la paroi (14), afin de commander l'organe de réglage de débit (52) en fonction de la différence de température entre le panneau ou la plaque de conversion et la paroi.

10. Dispositif selon la revendication 7, **caractérisé en ce que** les moyens de commande comprennent des moyens électroniques de commande.

11. Dispositif selon l'une des revendications 7 à 10, **caractérisé en ce que** les moyens de commande comprennent au moins un composant photosensible (68) propre à détecter l'ensoleillement d'un panneau (12) et à générer une tension électrique (V) représentative de l'ensoleillement.

12. Dispositif selon la revendication 11, **caractérisé en ce que** la tension électrique (V) générée par le composant photosensible (68) est utilisée directement en tant qu'énergie pour actionner l'organe de réglage de débit (52).

13. Dispositif selon la revendication 11, **caractérisé en ce que** la tension électrique (V) générée par le composant photosensible (68) est utilisés en tant que signal (S) pour autoriser ou interdire le fonctionnement de l'organa de réglage de débit (52).

14. Dispositif selon l'une des revendications 1 à 13, **caractérisé en ce qu'**il est réalisé sous la forme d'un module comprenant un cadre (34) supportant les composants du dispositif.

## Claims

1. Device for transferring heat between a panel (12) able to be heated by solar radiation (S) and a wall (14) to be heated, comprising a dividing plate (28) able to be arranged between the panel (12) and the wall (14), parallel to both in such a way as to delimit the closed external space (30) between the panel (12) and the dividing plate (28) and a closed internal space (32) between the dividing plate (28) and the wall (14), and air-circulating means (48, 50, 52) comprising at least one fan (52),
**characterized in that** the dividing plate (28) is an insulating plate, **in that** a partition (46, 44) is arranged in each of the outer space (30) and inner space (32) to define therein at least one path for air circulation of generally U-shape with two branches (30-A, 30-B; 32-A, 32-B) one on each side of the partition, **in that** the air-circulating means comprise at least two openings provided in the dividing plate (28) and able to cause the branches (30-A, 30-B) of the external space (30) to communicate with the branches (32-A, 32-B) of the internal space (32), and **in that** the fan (52) is placed across the dividing plate (28) and is able to be placed selectively in at least one of the following states:
- an open state allowing circulation of air between the external space (30) and the internal space (32) and thus allowing a transfer of heat between the panel (12) and the wall (14); and
- a closed state preventing circulation of air between the external space (30) and the internal space (32) and thus preventing the transfer of heat between the panel (12) and the wall (14).

2. Device according to Claim 1, **characterized in that** the air circulating means comprise (48, 50) placed substantially at the same height (h1, h2) with respect to one side (34-1) of the device.

3. Device according to one of Claims 1 and 2, **characterized in that** the air circulating means comprise at least one first opening (48) providing communication between a first branch (30-A) of the external space (30) and a first branch (32-A) of the internal space (32), and at least one second opening (50) providing communication between a second branch (32-B) of the external space (30) and a second branch (32-B) of the internal space (32).

4. Device according to one of Claims 1 to 3, **characterized in that** it includes in addition supplementary plate (74), known as a buffer plate placed between the panel (12) and the insulating plate (28) to create a closed buffer space (76) between the external space (30) and the insulating plate (28).

5. Device according to one of Claims 1 to 3, **characterized in that** it includes in addition an intermediate plate (98) or conversion plate placed between the panel (12) and the insulating plate (28), to create a first air circuit (106) able to transfer heat between the intermediate plate (98) and the wall (14), or vice versa, and to create a second air circuit (114) able to remove heat to the outside, and **in that** the first air circuit (106) and the second air circuit (114) respectively comprise first air circulating means (52) and second air circulating means (116) which can be put selectively and independently into an open state or a closed state.

6. Device according to Claim 5, **characterized in that** the first air circuit (106) is a closed circuit able to communicate with the outside atmosphere through a small pressure-balancing opening (108), where as the second air circuit (114) is a closed circuit or a circuit open to the atmosphere.

7. Device according to one of Claims 1 to 6, **characterized in that** it also includes control means (60; 62; 64; 68) able to control the fan (52).

8. Device according to Claim 7, **characterized in that** the control means comprise manual control means (60).

9. Device according to Claim 7, **characterized in that** the control means include at least two temperature sensors (62, 64) able to detect the respective temperatures of the panel (12) or the conversion plate (22; 98), and of the wall (14) so as to control the flow regulating member (52) as a function of the difference in temperature between the panel or the conversion plate and the wall.

10. Device according to Claim 7, **characterized in that** the control means comprise electronic control means.

11. Device according to one of Claims 7 to 10, **characterized in that** the control means include at least one photosensitive component (68) able to detect the insolation on a panel (12) and to generate an electric voltage (V) representative of the insolation.

12. Device according to Claim 11, **characterized in that** the electric voltage (V) generated by the photosensitive component (68) is used directly as energy for operating the flow regulating member (52).

13. Device according to Claim 11, **characterized in that** the electrical voltage (V) generated by the photosensitive component (68) is used as a signal (S) for causing or preventing operation of the flow regulating member (52).

14. Device according to one of Claims 1 to 13, **characterized in that** it is realized in the form of a module comprising a frame (34) supporting the components of the device.

## Patentansprüche

1. Vorrichtung zur Übertragung von Wärme zwischen einem Panel (12), das dazu ausgelegt ist, durch eine Sonnenbestrahlung (S) erwärmt zu werden, und einer zu erwärmenden Wand (14), eine Trennplatte (28) umfassend, die dazu ausgelegt ist, zwischen dem Panel (12) und der Wand (14) parallel zu diesen angeordnet zu werden, um einen geschlossenen äußeren Raum (30) zwischen dem Panel (12) und der Trennplatte (28), und einen geschlossenen inneren Raum (32) zwischen der Trennplatte (28) und der Wand (14) abzugrenzen, sowie Luftzirkulationseinrichtungen (48, 50, 52) mit mindestens einem Ventilator (52),
**dadurch gekennzeichnet, dass** die Trennplatte (28) eine Isolierplatte ist, dass eine Trennwand (46, 44) jeweils im äußeren Raum (30) bzw. inneren Raum (32) angeordnet ist, um dort mindestens einen im allgemeinen U-förmigen Zirkulationsverlauf mit zwei Zweigen (30-A, 30-B; 32-A, 32-B) beidseits der Trennwand zu bilden, dass die Luftzirkulationseinrichtungen mindestens zwei Öffnungen (48, 50) umfassen, die in der Trennplatte (28) ausgebildet sind, und dazu ausgelegt sind, die Zweige (30-A, 30-B) des äußeren Raums (30) mit den Zweigen (32-A, 32-B) des inneren Raums (32) in Verbindung zu setzen, und dass der Ventilator (52) die Trennplatte (28) durchquerend eingesetzt ist und selektiv in mindestens einen der folgenden Zustände versetzt werden kann:
- einen geöffneten Zustand, der eine Luftzirkulation zwischen dem äußeren Raum (30) und dem inneren Raum (32) zulässt, und somit eine Wärmeübertragung zwischen dem Panel (12) und der Wand (14) ermöglicht; und
- einen geschlossenen Zustand, der eine Luftzirkulation zwischen dem äußeren Raum (30) und dem inneren Raum (32) unterbindet, und somit eine Wärmeübertragung zwischen dem Panel (12) und der Wand (14) verhindert.

2. Vorrichtung nach Anspruch 1, **dadurch gekennzeichnet, dass** die Luftzirkulationseinrichtungen zwei Öffnungen (48, 50) umfassen, die im wesentlichen auf derselben Höhe (h1, h2) bezüglich einer Seite (34-1) der Vorrichtung angeordnet sind.

3. Vorrichtung nach einem der Ansprüche 1 und 2, **dadurch gekennzeichnet, dass** die Luftzirkulationseinrichtungen mindestens eine erste Öffnung (48) umfassen, die einen ersten Zweig (30-A) des äußeren Raums (30) mit einem ersten Zweig (32-A) des inneren Raums (32) in Verbindung setzt, und mindestens eine zweite Öffnung (50), die einen zweiten Zweig (30-B) des äußeren Raums (30) mit einem zweiten Zweig (32-B) des inneren Raums (32) in Verbindung setzt.

4. Vorrichtung nach einem der Ansprüche 1 bis 3, **dadurch gekennzeichnet, dass** sie darüber hinaus eine zusätzliche Platte (74), Pufferplatte genannt, umfasst, die zwischen dem Panel (12) und der Isolierplatte (28) angeordnet ist, um einen geschlossenen Pufferraum (76) zwischen dem äußeren Raum (30) und der Isolierplatte (28) zu schaffen.

5. Vorrichtung nach einem der Ansprüche 1 bis 3, **dadurch gekennzeichnet, dass** sie darüber hinaus eine Einschubplatte (98), Konversionsplatte genannt, umfasst, die zwischen dem Panel (12) und der Isolierplatte (28) angeordnet ist, um einen ersten Luftkreislauf (106) zu erzeugen, der dazu ausgelegt ist, Wärme zwischen der Einschubplatte (98) und der Wand (14) oder umgekehrt zu übertragen, und um einen zweiten Luftkreislauf (114) zu erzeugen, der dazu ausgelegt ist, Wärme nach außen abzuführen, und dass der erste Luftkreislauf (106) und der zweite Luftkreislauf (114) jeweils erste Luftzirkulationseinrichtungen (52) bzw. zweite Luftzirkulationseinrichtungen (116) aufweisen, die selektiv und unabhängig voneinander in einen geöffneten oder geschlossenen Zustand versetzt werden können.

6. Vorrichtung nach Anspruch 5, **dadurch gekennzeichnet, dass** der erste Luftkreislauf (106) ein geschlossener Kreislauf ist, der mit der Außenumgebung durch eine kleine Druckausgleichsöffnung (108) in Verbindung stehen kann, während der zweite Luftkreislauf (114) ein nach außen offener oder geschlossener Kreislauf ist.

7. Vorrichtung nach einem der Ansprüche 1 bis 6, **dadurch gekennzeichnet, dass** sie darüber hinaus Steuereinrichtungen (60; 62; 64; 68) umfasst, die dazu ausgelegt sind, den Ventilator (52) zu steuern.

8. Vorrichtung nach Anspruch 7, **dadurch gekennzeichnet, dass** die Steuereinrichtungen manuelle Steuereinrichtungen (60) umfassen.

9. Vorrichtung nach Anspruch 7, **dadurch gekennzeichnet, dass** die Steuereinrichtungen mindestens zwei Temperaturfühler (62, 64) umfassen, die dazu ausgelegt sind, die jeweiligen Temperaturen des Panels (12) oder einer Konversionsplatte (22; 98), und der Wand (14) zu erfassen, um das Durchsatzreglerelement (52) in Abhängigkeit vom Temperaturunterschied zwischen dem Panel oder der Konversionsplatte und der Wand zu steuern.

10. Vorrichtung nach Anspruch 7, **dadurch gekennzeichnet, dass** die Steuereinrichtungen elektronische Steuereinrichtungen umfassen.

11. Vorrichtung nach einem der Ansprüche 7 bis 10, **dadurch gekennzeichnet, dass** die Steuereinrichtungen mindestens ein lichtempfindliches Bauteil (68) umfassen, das dazu ausgelegt ist, die Sonnenbestrahlung eines Panels (12) zu erfassen und eine elektrische Spannung (V) zu erzeugen, die für die Sonnenbestrahlung steht.

12. Vorrichtung nach Anspruch 11, **dadurch gekennzeichnet, dass** die vom lichtempfindlichen Bauteil (68) erzeugte elektrische Spannung (V) direkt als Energie zur Betätigung des Durchsatzreglerelements (52) verwendet wird.

13. Vorrichtung nach Anspruch 11, **dadurch gekennzeichnet, dass** die vom lichtempfindlichen Bauteil (68) erzeugte Spannung (V) direkt als Signal (S) verwendet wird, um den Betrieb des Durchsatzreglerelements (52) zuzulassen oder zu unterbinden.

14. Vorrichtung nach einem der Ansprüche 1 bis 13, **dadurch gekennzeichnet, dass** sie in Form eines Moduls mit einem Rahmen (34) ausgeführt ist, der die Bauteile der Vorrichtung trägt.
